Europäisches Patentamt

European Patent Office

Office européen des brevets

(11) Numéro de publication: **0 222 957**

**A1**

## (12) DEMANDE DE BREVET EUROPEEN

(21) Numéro de dépôt: **85450027.9**

(22) Date de dépôt: **14.11.85**

(51) Int. Cl.4: **G05D 23/19** , **H02J 3/14** , **F24D 19/10**

(43) Date de publication de la demande:
**27.05.87 Bulletin 87/22**

(84) Etats contractants désignés:
**DE GB IT**

(71) Demandeur: **APPLICATIONS ET RECHERCHES ELECTROTECHNIQUES AVANCEES A.R.E.A. Société Anonyme Monégasque:**
**2 Boulevard du Jardin Exotique**
**MC-98000 Monaco(MC)**
**0**

(72) Inventeur: **Ripoll, René Villa No.1 Résidence les Marguerites**
**Chemin des Revoires la Turbie**
**F-06320 Cap d'Ail(FR)**

(74) Mandataire: **Thébault, Jean-Louis**
**Cabinet Jean-Louis Thébault 50, Cours de Verdun**
**F-33000 Bordeaux(FR)**

(54) **Installation de régulation de chauffage électrique.**

(57) -L'objet de l'invention est une installation compre-nant un certain nombre d'éléments de chauffage électrique disséminés dans un certain nombre de locaux,caractérisée en ce qu'elle comprend un ensemble calculateur (3) connecté, à une série de sondes de température (4) disposées en des endroits déterminés à l'intérieur et à l'extérieur desdits locaux et, d'autre part, à des contacteurs électriques ($C_a$, $C_b$) de connexion sélective entre la source de courant électrique (1) et lesdits éléments chauffants le calculateur étant programmé pour interroger périodiquement et séquentiellement lesdites sondes (4) et commander en fonction des températures détectées par les sondes et de divers paramètres prédéterminés et/ou pré-programmés, la mise en ou hors service sélective et durant un temps déterminé, des éléments chauffants concernés.

-Application à la régulation du chauffage d'ensemble de locaux à usage professionnel ou d'habitation.

FIG.1.

EP 0 222 957 A1

## INSTALLATION DE REGULATION DE CHAUFFAGE ELECTRIQUE

La présente invention concerne une installation de régulation de chauffage capable de gérer de manière entièrement automatique un grand nombre d'éléments de chauffage électrique dans les meilleures conditions d'économie, de sécurité et de souplesse d'emploi.

Le but de l'invention est de proposer une installation polyvalente capable, non seulement d'effectuer les fonctions connues de délestage en cas de dépassement de la puissance électrique souscrite et de régulation du chauffage de base et du chauffage d'appoint, mais également capable d'effectuer une fonction d'optimisation, c'est-à-dire d'obtention du confort maximal dans le minimum de temps avec le minimum de dépense, d'assurer l'asservissement de l'ensemble de ces fonctions aux conditions horaires de tarification et d'effectuer la détection et la signalisation de certains défauts ou anomalies.

A cet effet, l'invention a pour objet une installation de régulation de chauffage comprenant un certain nombre d'éléments de chauffage électrique alimentés à partir d'un réseau de distribution d'énergie électrique et disséminés dans un certain nombre de locaux à usage professionnel ou d'habitation, caractérisée en ce qu'elle comprend un ensemble calculateur connecté, d'une part, par l'intermédiaire d'un bornier approprié, à une série de sondes de température disposées en des endroits déterminés à l'intérieur et à l'extérieur desdits locaux et, d'autre part, par l'intermédiaire d'un bornier approprié ,à des contacteurs électriques de connexion sélective entre la source de courant électrique et lesdits éléments chauffants répartis dans les diverses zones chauffées, le calculateur étant programmé pour interroger périodiquement et séquentiellement lesdites sondes et commander en fonction des températeurs détectées par les sondes et de divers paramètres prédéterminés et/ou préprogrammés, la mise en ou hors service sélective, par l'intermédiaire desdits contacteurs et durant un temps déterminé, des éléments chauffants concernés.

Un tel dispositif permet d'assurer un certain nombre de corrections de régulation en fonction des variations de température réelles en divers endroits de l'installation en sorte que l'on obtient une réelle optimisation de la régulation, c'est-à-dire le confort maximal dans le minimum de temps, avec le minimum de dépense.

D'autres caractéristiques et avantages ressortiront de la description qui va suivre d'un mode de réalisation de l'installation selon l'invention, description donnée à titre d'exemple uniquement et en regard des dessins annexés sur lesquels :

-Figure 1 représente le schéma général d'une installation conforme à l'invention, et

-Figure 2 représente un bloc diagramme de la partie calculateur de l'installation de la figure 1 avec ses liaisons avec l'extérieur.

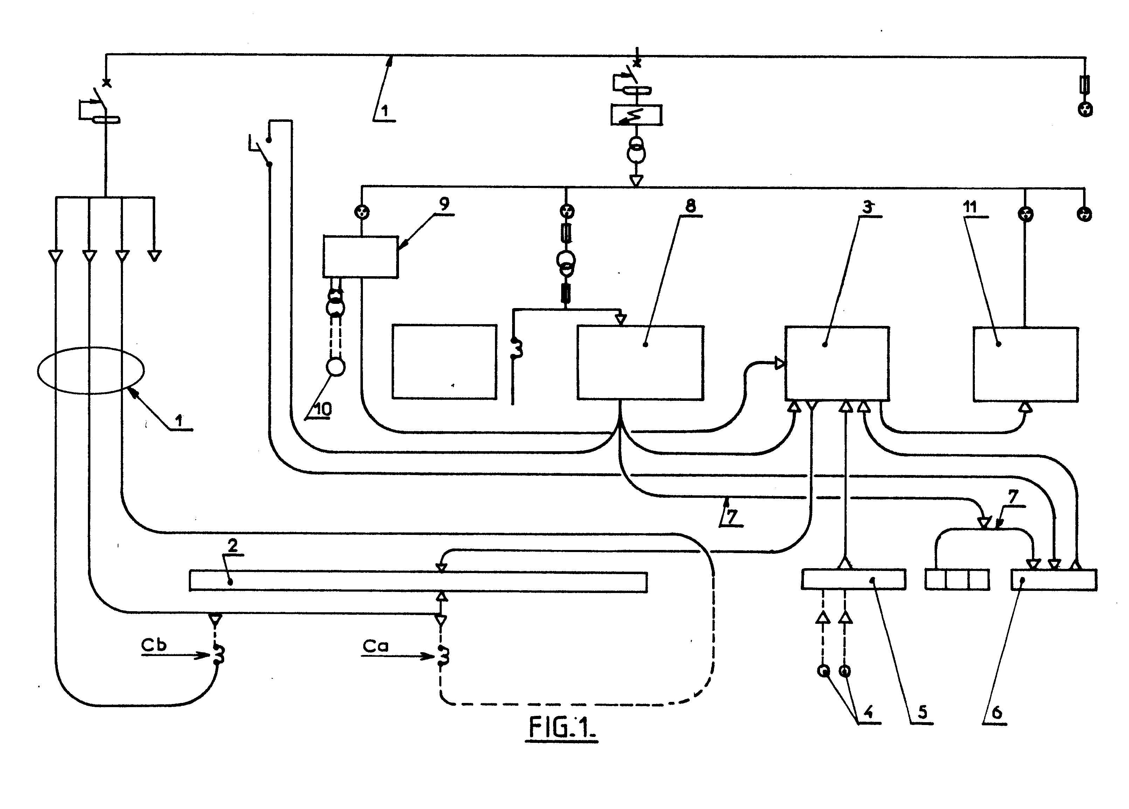

L'installation représentée sur la figure 1 comprend une alimentation électrique triphasée basse tension symbolisée en 1 connectée à un bornier puissance 2 lui-même relié aux différents éléments chauffants électriques (non représentés) constituant l'ensemble à réguler.

La connexion entre l'alimentation 1 et les différentes sorties du bornier 2 en direction des divers éléments chauffants se fait par deux séries de contacteurs.

Une première série $C_b$ de contacteurs (un seul étant représenté sur la figure 1), sont affectés au chauffage dit de base, chaque contacteur $C_b$ assurant l'alimentation en énergie électrique à un certain nombre d'éléments chauffants de base groupés en une zone déterminée de l'ensemble des locaux à chauffer (par exemple un contacteur $C_b$ commande le chauffage de base des appartements d'un même niveau ou étage cependant que tous les éléments chauffants de base de toutes les parties communes sont commandés par un contacteur $C_b$).

Une seconde série $C_a$ de contacteurs (un seul étant représenté sur la figure 1) sont affectés au chauffage d'appoint, chaque contacteur $C_a$ assurant l'alimentation en énergie électrique des éléments chauffants d'appoint d'un même appartement cependant qu'un contacteur $C_a$ commande le chauffage d'appoint desdites parties communes.

Les différents contacteurs $C_a$, $C_b$ sont commandés sélectivement à partir d'un calculateur 3.

Le calculateur 3 reçoit des informations provenant de sondes thermométriques 4 dont deux seulement sont représentées sur la figure 1. Ces sondes, en nombre variable selon l'importance et la configuration des locaux à chauffer, sont disposées les unes sur les façades extérieures des bâtiments, par exemple aux quatre points cardinaux, d'autres sont disposées dans les parties communes, d'autres enfin sont placées chacune dans un des logements ou locaux à réguler.

Les sondes 4 sont connectées au calculateur 3 par l'intermédiaire d'un bornier 5 approprié.

Le calculateur 3 reçoit également des informations (alarmes techniques) provenant d'un bornier 6 relié aux divers systèmes d'alarme ou signalisation techniques de l'ensemble d'habitation (ascenseur, incendie, présence d'eau, télévision, effraction, ventilation mécanique contrôlée, etc...).

Ces systèmes sont alimentés en courant continu par une ligne 7 reliée à un ensemble d'alimentation 8 lui-même alimenté à partir de la ligne 1 à la manière habituelle.

L'ensemble 8 alimente en courant continu le calculateur 3.

Le calculateur 3 est relié à un ampèremètre analogique délesteur 9 également connecté à un tableau général basse-tension symbolisé en 10.

Enfin, le calculateur 3 est connecté à un écran de visualisation 11.

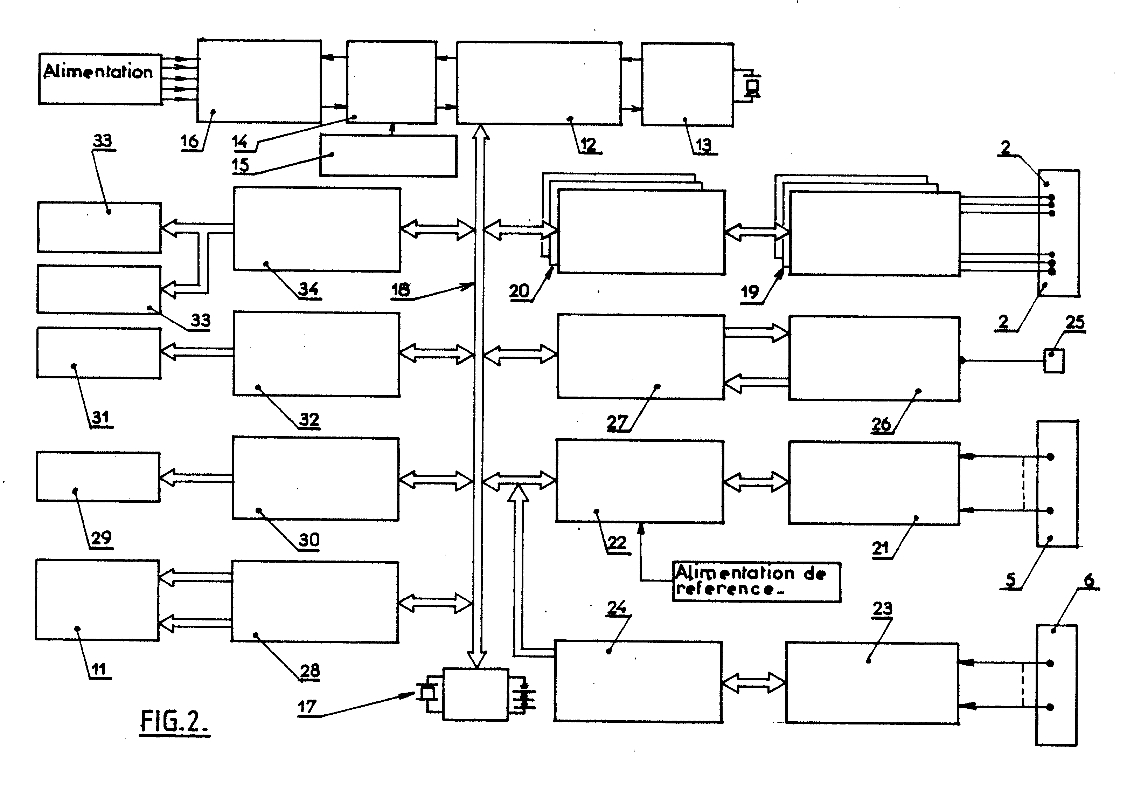

La figure 2 représente plus en détails la structure de l'ensemble calculateur et de ses liaisons périphériques.

Le calculateur 3 a une structure connue et comporte une unité centrale 12 associée à un coprocesseur 13, à une mémoire à accès aléatoire 14 et sa sauvegarde 15, à une mémoire de programme 16 du type EPROM, et à une horloge de temps légal 17 par l'intermédiaire d'un bus 18 de connexion aux divers interfaces.

Le bornier de puissance 2 est relié au bus 18 par une série de 1 à 14 cartes 19 dites de relais puissance, à huit sorties par cartes et par une série de 1 à 7 cartes 20 dites de commande de puissance.

Le bornier 5 des sondes est relié au bus 18 par une carte 21 de multiplexage analogique et une carte 22 de conversion analogique/numérique.

Le bornier 6 des alarmes techniques est relié au bus 18 par un découpleur 23 et une carte 24 à n entrées tout ou rien.

Un thermostat 25 placé dans l'enceinte du calculateur 3, relié au bus 18 par une carte 26 de commutation manuel/automatique et un chien de garde 27, permet d'assurer une certaine régulation du chauffage en dépannage (lorsque le calculateur n'est pas un service).

L'écran vidéo 11 est relié au bus 18 par l'intermédiaire d'un interface 28 (contrôleur/armoire écran).

Un clavier 29 avec un interface clavier 30 permet de communiquer avec le calculateur.

D'autres équipements peuvent être connectés au calculateur tels qu'une imprimante 31 avec son interface 32 et des unités 33 d'enregistrement magnétique avec leur interface approprié 34.

Tous les organes ou circuits symbolisés sur la figure 2 sont de conception bien connue et n'ont pas besoin d'être décrits plus en détails.

Le fonctionnement du dispositif décrit ci-dessus est le suivant.

Tout d'abord le dispositif assure les fonctions traditionnelles de délestage en cas de dépassement de la puissance souscrite, et de chauffage de base, complété par un chauffage d'appoint pour atteindre la température de confort.

En outre, conformément à l'invention, le calculateur 3 optimise la régulation du chauffage dans les différentes parties de l'installation en fonction des données réelles fournies par les diverses sondes de température 4 et suivant les tranches horaires.

A cet effet, périodiquement (toutes les 36 microsecondes par exemple), le calculateur 3 interroge séquentiellement les diverses sondes 4 et éventuellement, en fonction des valeurs locales de température fournies par lesdites sondes, modifie le programme pré-enregistré (en 16) de régulation du chauffage de l'installation.

Cette modification se fait aux seuls endroits nécessitant une augmentation ou une diminution d'apport de chaleur par une action sur le ou les contacteurs d'appoint $C_a$ affectés auxdits endroits ainsi qu'éventuellement sur le ou les contacteurs de base $C_b$ affectés auxdits endroits. L'excitation ou la désexcitation de ces contacteurs $C_a$, $C_b$ par le calculateur assure la mise en ou hors service des éléments chauffants intéressés.

La durée des modifications locales apportées par le calculateur 3 est soit prédéterminée (et variable suivant la zone de l'installation concernée), soit fixée à partir des données fournies par les sondes concernées.

En outre, le calculateur tient compte des tranches horaires et, notamment pour éviter le plus possible de consommer du courant pendant les heures de pointe, il augmentera, en fonction de la température extérieure, par exemple une heure avant le début des heures de pointe, le chauffage à titre prévisionnel en sorte que pendant les heures de pointe le chauffage pourra être coupé.

Cependant, durant ces heures de pointe, si nécessaire le chauffage peut être relancé si la température dans les appartements descend en dessous de 18°C.

Le calculateur peut également signaler des anomalies. Par exemple si pendant les heures de pointe la température dans un appartement donné descend en dessous de 18°C, alors que ce n'est pas le cas dans les appartements voisins, le calculateur commande le chauffage d'appoint dudit appartement et, si la remontée de la température n'est pas effective au bout d'un temps prédéterminé, coupe le chauffage et signale une anomalie.

De même le calculateur signale toute anomalie détectée par l'une des alarmes techniques connectées au bornier 6.

Lorsque le calculateur est en panne ou mis en position hors service, les circuits 25 à 27 assurent le fonctionnement en mode automatique mais non optimisé, c'est-à-dire l'asservissement du chauffage au programme pré-enregistré et mémorisé, sans tenir compte des éventuelles variations de températures détectées par les sondes 4.

## Revendications

1. Installation de régulation de chauffage comprenant un certain nombre d'éléments de chauffage électrique alimentés à partir d'un réseau de distribution d'énergie électrique et disséminés dans un certain nombre de locaux à usage professionnel ou d'habitation, caractérisée en ce qu'elle comprend un ensemble calculateur (3) connecté, d'une part, par l'intermédiaire d'un bornier approprié (5), à une série de sondes de température (4) disposées en des endroits déterminés à l'intérieur et à l'extérieur desdits locaux et, d'autre part, par l'intermédiaire d'un bornier approprié (2) à des contacteurs électriques ($C_a, C_b$) de connexion sélective entre la source de courant électrique (1) et lesdits éléments chauffants répartis dans les diverses zones chauffées, le calculateur étant programmé pour interroger périodiquement et séquentiellement lesdites sondes (4) et commander en fonction des températures détectées par les sondes et de divers paramètres prédéterminés et/ou pré-programmés, la mise en ou hors service sélective par l'intermédiaire desdits contacteurs et durant un temps déterminé, des éléments chauffants concernés.

2. Installation suivant la revendication 1, caractérisée en ce que lesdits contacteurs électriques sont groupés en une première série ($C_b$) commandant chacun un ou plusieurs éléments de chauffage de base et en une seconde série ($C_a$) commandant chacun un ou plusieurs éléments de chauffage d'appoint.

3. Installation suivant la revendication 1 ou 2, caractérisée en ce que ledit ensemble calculateur (3) est relié, par un bornier (6) approprié, à une série de dispositifs d'alarme technique équipant lesdits locaux.

4. Installation suivant l'une des revendications 1 à 3, caractérisée en ce que l'ensemble calculateur (3) est muni d'équipements périphériques de visualisation/signalisation (11), d'enregistrement (33) des paramètres et variables de régulation et des anomalies, tant en ce qui concerne le chauffage que les dispositifs d'alarme technique.

5. Installation suivant la revendication 1, caractérisée en ce que l'ensemble calculateur (3) commande avant les heures de pointe un chauffage prévisionnel dont l'intensité et la durée sont fonction des températures détectées par lesdites sondes (4) et de divers paramètres pré-enregistrés.

6. Installation suivant l'une des revendications 1 à 5, caractérisée en ce que l'ensemble calculateur (3) est programmé de manière à détecter toute anomalie de température entre zones analogues de chauffage de l'installation et à commander, au cas où l'intervention effectuée par le calculateur en vue de remédier à l'anomalie détectée est inopérante, l'arrêt du chauffage dans la zone concernée et la signalisation d'un état d'anomalie.

FIG.1.

Alimentation

FIG.2.

Alimentation de reference.

0 222 957

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 473 183 (KENSINGER et al.)<br>* colonne 1, ligne 39 - colonne 3, ligne 4; colonne 4, ligne 16 - colonne 5, ligne 8; colonne 5, ligne 42 - colonne 7, ligne 8; colonne 7, lignes 29-63; figures 1, 7 * | 1 | G 05 D 23/19<br>H 02 J 3/14<br>F 24 D 19/10 |
| A | | 5 | |
| | --- | | |
| X | US-A-4 110 632 (WYLAND)<br>* colonne 4, ligne 21 - colonne 6, ligne 25; figure 1 * | 1 | |
| A | | 5 | |
| | --- | | |
| X | JOURNAL A, vol. 22, no., 3 juillet 1981, pages 112-120, Antwerpen, BE; GUGGISBERG: "Energy saving with building automation systems"<br>* page 113, paragraph 2 - page 114, paragraph 2.2; page 116, paragraph 2.5 - page 118, paragraph 2.7; figures 1, 5, 6 * | 1,4 | |
| A | | 5 | |
| | ---     -/- | | |

|  |  |  |
|---|---|---|
| | DOMAINES TECHNIQUES RECHERCHES (Int. Cl.4) | |
| | G 05 D 23/00<br>H 02 J 3/00<br>F 24 D 19/00 | |

Le présent rapport de recherche a été établi pour toutes les revendications

| Lieu de la recherche | Date d'achèvement de la recherche | Examinateur |
|---|---|---|
| BERLIN | 30-06-1986 | BEITNER M.J.J.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 116 486 (SOUSSAN et al.) * page 3, ligne 4 - page 4, ligne 4; page 5, lignes 1-22; page 6, lignes 2-19; page 18, ligne 20 - page 19, ligne 8; page 20, lignes 7-17; revendications 1, 2, 7, 9, 12-16 * | 3,4,6 | |
| | --- | | |
| A | FR-A-2 497 326 (ANTONELLI et al.) * page 1, lignes 2-24; page 2, ligne 33 - page 4, ligne 22; figure 1 * | 2 | |
| | --- | | |
| A | GB-A-2 069 729 (HONEYWELL) * abrégé; page 2, ligne 10 - page 3, ligne 24; figure 1 * | 5 | |
| | --- | | |
| A | US-A-4 272 012 (MOLNAR et al.) * colonne 2, lignes 17-31; colonne 2, ligne 44 - colonne 3, ligne 18; colonne 6, ligne 50 - colonne 7, ligne 11; figures 1, 3 * | 4,6 | **DOMAINES TECHNIQUES RECHERCHES (Int. Cl.4)** |
| | --- | | |
| A | US-A-4 308 911 (MANDL) * colonne 1, ligne 31 - colonne 2, ligne 62; colonne 4, lignes 5-37; colonne 8, ligne 31 - colonne 9, ligne 52; revendicationes 2-5; figures 3, 7 * | 3,4,6 | |
| | ----- | | |

Le présent rapport de recherche a été établi pour toutes les revendications

| Lieu de la recherche | Date d'achèvement de la recherche | Examinateur |
|---|---|---|
| BERLIN | 30-06-1986 | BEITNER M.J.J.B. |